# FASCICULE DE BREVET EUROPEEN

(11) **EP 1 756 843 B1**
(45) Date de publication et mention de la délivrance du brevet: **18.03.2009**
(21) Numéro de dépôt: 05775330.3
(22) Date de dépôt: 09.06.2005
(51) Int. Cl.: H01G 4/228, H01G 4/32, H01R 13/00, H01G 9/008, H01M 2/30

(54) **COUVERCLE DE SUPERCONDENSATEUR AVEC BORNE CENTRALE INTEGREE**
SUPERKONDENSATORABDECKUNG MIT INTEGRIERTEM ZENTRALEM ANSCHLUSS
SUPERCAPACITOR COVER WITH INTEGRATED CENTER TERMINAL

(30) Priorité: 11.06.2004 FR 0406326
(43) Date de publication de la demande: 28.02.2007
(73) Titulaire: Batscap, 29500 Ergué-Gabéric (FR)
(72) Inventeur: CAUMONT, Olivier, F-29000 Quimper (FR); HASCOET, Xavier, F-29550 Plomodiern (FR)
(74) Mandataire: Texier, Christian
(86) Numéro de dépôt international: PCT/FR2005/001425
(87) Numéro de publication internationale: WO 2006/000705

(56) Documents cités:
- DE-A- 3 226 406
- FR-A- 2 583 213
- FR-A- 2 771 218
- US-A- 5 198 313
- PATENT ABSTRACTS OF JAPAN vol. 1997, no. 08, 29 août 1997 (1997-08-29) -& JP 09 092338 A (SONY CORP), 4 avril 1997 (1997-04-04)

## Description

L'invention concerne les aménagements de connexion électrique et d'enveloppe externe pour les éléments de stockage d'énergie électrique (batteries, condensateurs, par exemple condensateurs de type électrochimique) et notamment pour les supercondensateurs.

Un élément de stockage d'énergie électrique, notamment un supercondensateur, se présente sous la forme d'un enroulement de plusieurs couches de matériau avec, dépassant à chaque extrémité de l'enroulement, une feuille à base d'aluminium, appelée collecteur et qui permet de drainer le courant vers l'extérieur. Ce collecteur doit être relié électriquement à une borne de connexion électrique qui fait partie de l'enveloppe globale de supercondensateur, soit dans son couvercle, soit dans son boîtier.

Il est connu de souder le collecteur sur le connecteur de la borne par soudure, éventuellement par soudure laser sur le fond de bossages ralisés dans le connecteur.

Mais un supercondensateur génère des forts courants de charge ou de décharge sur les tranches de ce collecteur qui est relativement mou, parce que relativement fin, de sorte qu'il faut connecter le maximum de tranches (de surface) à la borne ou au couvercle ou au boîtier pour limiter la résistance électrique de connexion résultante et donc les échauffements, notamment à l'interface entre les tranches du collecteur et le connecteur.

Pour des raisons de performances mais également pour la simplicité de mise en oeuvre et de coût, la borne devrait idéalement faire partie intégrante du couvercle ou du boîtier auquel est relié électriquement le collecteur, et non rapportée à celui-ci par une autre étape de procédé.

La borne ne fait pas partie du couvercle dans les solutions existantes (produits commerciaux).

De plus, il est difficile de concilier sur une même pièce (couvercle, boîtier) une borne centrale collectrice de courant la plus large possible et une soudure dans des bossages atteignant le plus possible les spires du centre de l'enroulement.

En effet, une borne centrale doit être le plus surfacique possible (section de collection et de passage de courant suffisante) et occupe donc une certaine surface au centre du couvercle qui peut limiter l'accessibilité des bossages et empêcher les tirs laser d'atteindre les spires du centre.

Dans l'art antérieur, la borne est, pour cette raison, souvent traitée à part et rapportée au couvercle ou au fond du boîtier, ce qui permet de concilier les deux aspects.

Mais cela oblige à les lier ensuite pour assurer l'ensemble des fonctions nécessaires. Cette liaison génère, d'un point de vue électrique, une résistance série supplémentaire néfaste aux qualités du supercondensateur, une étape process donc un coût, et aussi une fragilité mécanique supplémentaires.

Les bornes rapportées au couvercle ou boîtier par une soudure laser s'avèrent ainsi présenter une fragilité de la liaison entre les deux pièces.

On a certes proposé, pour la fixation de la borne, un coincement de deux cônes entre eux, mais un tel coincement augmente les échauffements par résistance de contact de surface à l'interface entre les deux pièces coincées ensemble. Par ailleurs, l'ajustement des pièces doit alors être parfait, ce qui génère un coût d'usinage important.

Le document JP-A-09092338 décrit une batterie dont la borne de connexion fait partie du couvercle.

Le but de l'invention est de faciliter le contact du connecteur avec les tranches des spires les plus internes d'un enroulement de composant de stockage électrique, tout en ménageant un espace suffisant pour une borne centrale à contour sensiblement circulaire, notamment venue de matière avec le connecteur.

Ce but est atteint selon l'invention grâce à un composant de stockage d'énergie électrique comportant un enroulement de spires, et au moins un connecteur incluant un plateau au contact d'une pluralité de ces spires, le plateau de connecteur présentant une face munie d'une borne de forme essentiellement de révolution, le plateau formant en outre une série de bossages qui s'étendent en relief sur une face du plateau opposée à celle portant la borne, caractérisé en ce que la borne présente au moins un évidement interne et en ce qu'au moins un bossage pénètre dans un tel évidement.

D'autres caractéristiques, buts et avantages de l'invention apparaîtront à la lecture de la description détaillée qui va suivre, faite en référence aux figures annexées sur lesquelles :
- la figure 1 est une vue en perspective d'un connecteur selon un premier mode de réalisation de l'invention ;
- la figure 2 est une vue de dessus de ce même connecteur ;
- la figure 3 est une vue en perspective et de dessous de ce même connecteur ;
- la figure 4 illustre un premier mode de soudage de ce connecteur sur un enroulement de stockage ;
- la figure 5 est une vue de dessus de ce premier mode de soudage de ce connecteur ;
- la figure 6 illustre un second mode de soudage de ce connecteur ;
- la figure 7 est une vue de côté illustrant un mode de fixation d'un tel connecteur sur un élément de boîtier de supercondensateur ;
- la figure 8 est une vue de dessus d'un connecteur selon un second mode de réalisation de l'invention ;
- la figure 9 est une vue de côté de ce même connecteur ;
- la figure 10 et une vue de dessus d'un connecteur selon un troisième mode de réalisation de l'invention ;
- la figure 11 est une vue de dessus d'un connecteur selon un quatrième mode de réalisation de l'invention ;
- la figure 12 est une vue de côté de ce même connecteur ;
- la figure 13 est une vue de dessus d'un connecteur selon un cinquième mode de réalisation de l'invention.

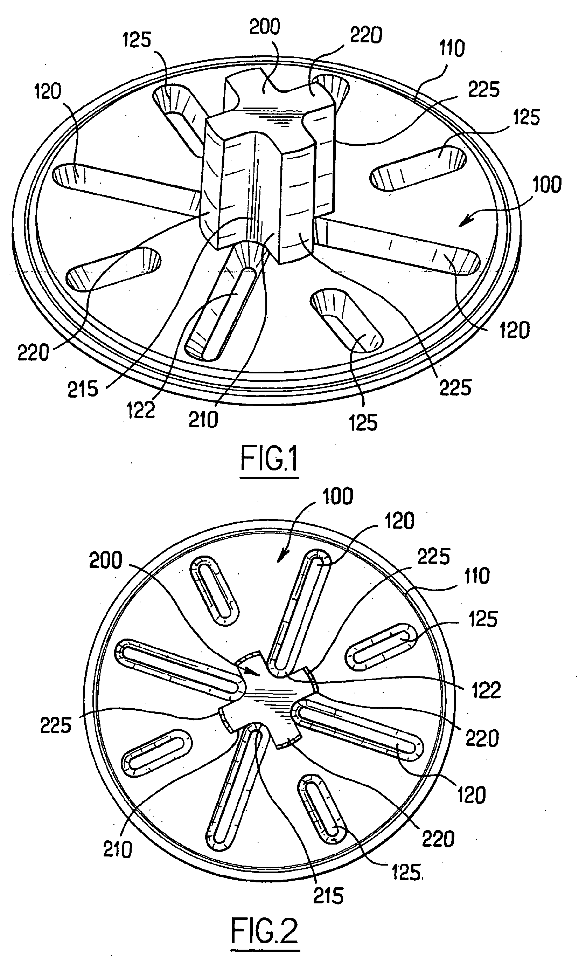

Le connecteur de la figure 1 est une pièce monobloc, ici en aluminium, comportant à la fois un plateau 100 destiné à recouvrir et contacter des spires d'un enroulement de supercondensateur, et un tourillon supérieur 200 s'élevant en partie centrale de ce plateau pour former la borne de connexion extérieure d'un supercondensateur.

Le plateau de recouvrement est un disque au contour correspondant sensiblement à celui de l'enroulement à recouvrir, ce contour étant ici muni d'une gorge 110 destinée à la réception d'un joint pour fermeture étanche du supercondensateur.

Ce plateau présente une série de déformations ou bossages 120, 125 qui s'élèvent en relief sur une face inférieure du plateau 100, c'est à dire sur la face opposée à celle où s'élève la borne de connexion externe 200.

Ces bossages présentent une hauteur faible par rapport à celle de la borne 200 mais présentent, pour la plupart, une étendue suffisante pour franchir radialement une majorité des spires de l'enroulement.

Pour contacter un maximum de ces tranches, les bossages 120, 125 s'étendent chacun transversalement à ces tranches, c'est à dire à chaque fois selon un rayon du connecteur.

Certains bossages 120 s'étendent sur une majorité de la longueur du rayon considéré. Ces bossages 120 à étendue radiale maximale sont ici au nombre de quatre, et sont placés à 90° les uns des autres autour de la borne 200. Ces bossages longs 120 seront nommés par la suite « bossages principaux » du fait de leur fonction électrique consistant à collecter un maximum de quantité de courant disponible au contact des spires de l'enroulement.

Quatre autres bossages 125, appelés ci-après « bossages complémentaires » 125 sont, bien qu'orientés également radialement, limités dans leur étendue à la traversée d'une zone de pourtour du plateau 100 afin de ne collecter le courant de l'enroulement que sur cette zone de pourtour.

Par cette fonction consistant à collecter le courant seulement au pourtour, ces bossages complémentaires 125 équilibrent le flux électrique dans le collecteur pour une meilleure efficacité du rôle du collecteur et pour une réduction de sa résistance électrique globale.

Le rapport de longueurs entre bossages complémentaires 125 et bossages principaux 120 est avantageusement choisi pour répartir au mieux le courant dans la bobine et ainsi équilibrer les zones d'échauffements.

Les bossages complémentaires 125 pourront être soudés pour des applications à fort courant moyen (par exemple des applications de cyclage dans les transports hybrides ou électriques) et pourront ne pas l'être pour des applications à faible courant moyen (par exemple dans les applications dites de floating pour les alimentations sans interruption.

Le couvercle comprenant ce connecteur pourra comporter plusieurs bossages principaux 120 et complémentaires 125 par angle de 90° pour augmenter la section de soudure avec la bobine.

La borne 200 décrite ici appartient donc à la famille des bornes présentant sensiblement une forme de révolution, c'est à dire un contour externe s'inscrivant au moins partiellement sur un cercle.

On notera qu'un tel cercle de délimitation peut être constant sur la hauteur de la borne ou croissant vers la base de la borne ce qui confère à celle-ci une forme au moins partiellement tronconique, conformément aux dispositions spécifiées ci-après.

La forme essentiellement de révolution est adaptée pour la réception d'une cosse de type collier de serrage typiquement associé à une telle borne.

Une forme essentiellement de révolution permet aussi l'obtention d'une surface supérieure adaptée pour coopérer avec une cosse plane, par exemple fixée elle-aussi à l'aide de moyens de serrage périphérique.

La forme de révolution, même si elle est seulement partielle, est également avantageuse car bien adaptée pour porter un filetage externe pour fixation d'une cosse de type « à visser ».

On peut alors également y visser un écrou pour serrer une cosse plate contre la surface du plateau couvrant du collecteur.

Une telle borne 200 peut aussi présenter un taraudage interne pour emboîtement ou vissage d'un connecteur mâle.

La borne 200 présentée ici est toutefois munie de quatre évidements 210, répartis à 90° les uns des autres et s'étendant chacun sur toute la hauteur de la borne 200.

De ce fait la borne 200 présente, en vue de dessus, une forme de croix à branches orthogonales 220.

Les évidements 210 présentent chacun une paroi de fond 215 de forme courbe, c'est à dire en arc de cercle lorsque vus de dessus, s'ils sont réalisés par un process d'emboutissage-filage.

Plus précisément, chaque paroi 215 de fond d'évidement est configurée en tronc de cône de sorte que l'évidement s'élargit de bas en haut. Inversement, chaque branche, délimitée par deux évidements, s'élargit lorsque l'on parcourt celle-ci de haut en bas (de son extrémité vers sa base).

Les bossages principaux 120 viennent chacun s'étendre jusqu'au contact même de la paroi de fond d'un évidement 210 associé.

Les bossages principaux 120 présentent eux-mêmes des parois latérales 122 en pente, et ce notamment à leur extrémité interne à la borne 200, ces parois latérales formant une dépouille lors du process de fabrication du couvercle.

Chaque paroi d'extrémité interne de bossage principal vient de ce fait s'inscrire directement dans le prolongement de la paroi de fond 215 de l'évidement 210 considéré.

Les bossages complémentaires 125 s'arrêtent quant à eux plus ou moins largement à distance de la périphérie de la borne 200.

Les parois de la borne qui sont les plus proches des bossages complémentaires 125, c'est à dire les extrémités 225 des branches 220 de la borne 220, sont elles-mêmes tronconiques.

Les évidements 210 autorisent la réalisation d'une borne à grand rayon simultanément à des bossages à large portée vers le centre du couvercle.

Ces aménagements autorisent en outre un soudage étendu du couvercle sur les enroulements les plus internes.

Un tel soudage s'effectue au niveau des parois de fond des bossages 120, 125 qui sont au contact des spires de l'enroulement. Parmi les techniques de soudage possibles, le soudage par tir laser sur le fond des bossages est celui qui donne les meilleurs résultats.

Ainsi, le couvercle décrit ici permet un soudage du bossage sur l'enroulement y compris dans les parties les plus centrales du collecteur, c'est à dire à l'intérieur même du contour circulaire délimitant la borne.

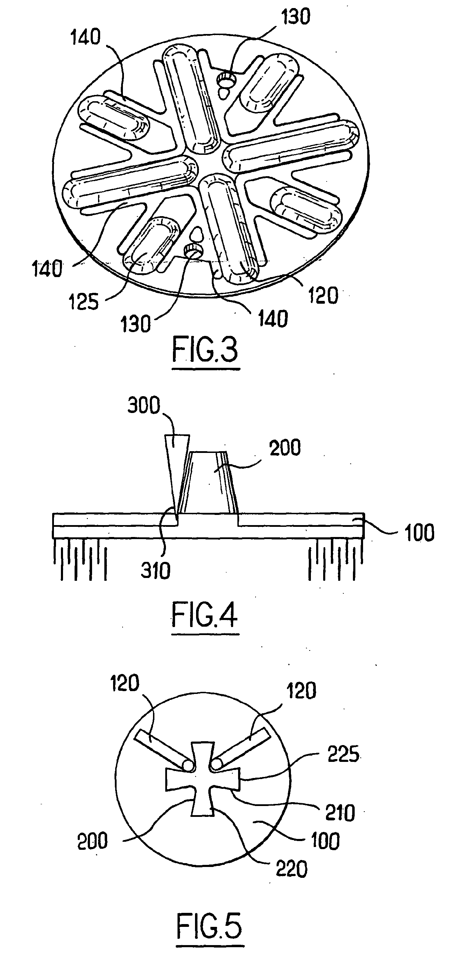

Un faisceau laser 300 (figure 4), est typiquement ponctuel à sa pointe, en présentant toutefois une certaine largeur en partie courante.

Pour que la pointe du faisceau 300 puisse pénétrer dans les évidements de la borne sans que le faisceau ne soit interrompu dans sa partie courante, les parois tronconiques internes 215 des évidements 210 sont suffisamment en pente pour recevoir la totalité du faisceau laser 300.

On ménage, en variante, des évidements 210 dont le contour 215 est suffisamment large pour englober le faisceau laser 300 dans sa partie la plus large, c'est à dire au niveau de la limite supérieure de la borne 200 (figure 5).

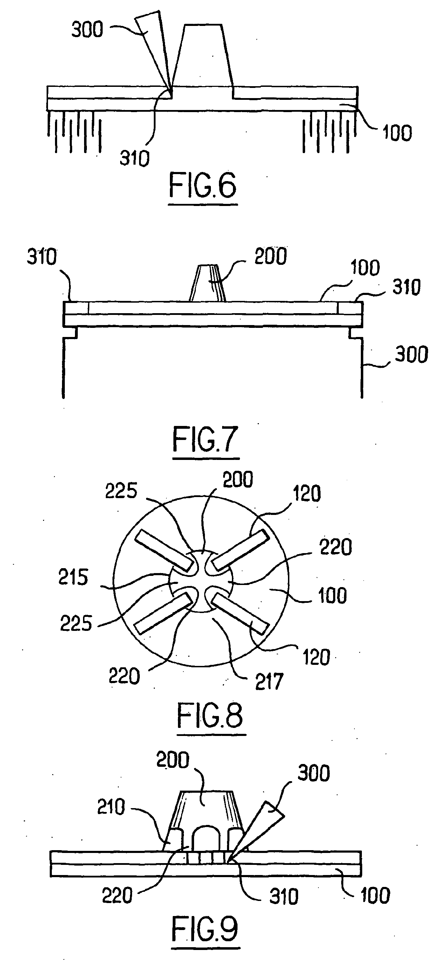

Un autre mode de réalisation (figure 6) consiste à pencher légèrement le faisceau laser 300 de façon à ce que sa forme de cône n'approche la borne 200 qu'à sa pointe 310.

Malgré la troncature de la borne 200, la surface de contact reste ici largement satisfaisante avec une surface de l'ordre de 365 mm2 (pour une borne initiale de base diamètre 18mm, de haut diamètre 17 mm et de hauteur 20mm, et tronquée au 2/3) permettant un courant nominal continu d'environ 900 A sans échauffement excessif.

Pour comparaison, une borne tronconique pleine équivalente présente une surface de contact de 1100 mm² soit un courant nominal continu de 2750 A dans un matériau de type aluminium (2.5 A/mm² sans échauffement excessif).

Le fait d'avoir ici une seule pièce incluant plateau, bossages et borne, venue d'un même bloc de matière et qui assure à la fois les fonctions de connectique interne et externe simplifie l'assemblage et diminue le coût du composant complet.

Le présent couvercle est étanchéifié à sa périphérie grâce à un joint d'étanchéité sur lequel est rabattu le bord 410 du boîtier 400 (figure 7). Comme exposé précédemment, ce collecteur possède un rebord 110 destiné à bloquer un tel joint lors de l'opération de fermeture.

Ce couvercle pourra comporter tout autre type de bord susceptible d'être utilisé pour fermer le composant (sertissage, soudure, etc.).

Le connecteur présente deux trous excentrés 130 destinés au passage d'un électrolyte après cette opération de fermeture pour permettre l'imprégnation de l'enroulement du supercondensateur par l'électrolyte après fermeture de l'enveloppe (boîtier ou tube + couvercle(s)). Les deux trous 130 sont ensuite bouchés de façon hermétique , par tout moyen connu.

Ce connecteur est également muni, sur sa face intérieure, d'un réseau de gorges 140 formant espace de circulation de l'électrolyte entre l'enroulement et le connecteur, afin d'aider à l'imprégnation.

Dans la variante de la figure 8, on propose une borne centrale 200, de forme essentiellement de révolution et même, plus précisément, extérieurement tronconique, et dont la base à contour essentiellement circulaire est évidée de manière à laisser pénétrer les bossages principaux 120 au plus près possible du centre des spires, à l'intérieur de la borne.

Dans cette variante, le tir laser s'effectue avantageusement en angle pour atteindre l'extrémité ces bossages 120 (figure 9).

Les évidements 210 présentent ici avantageusement une paroi interne 215 à section, considérée parallèlement au plateau couvrant, de forme ovale. Par cette forme ovale, les parois latérales de chaque évidement 210 viennent se rapprocher latéralement du bossage 120 pour venir le border au plus près, ici de manière sensiblement parallèle.

De ce fait, la borne 200 forme des branches 220 tendant chacune à s'élargir lorsque parcourue en direction de l'extérieur.

Ainsi, la borne, lorsque observée en section parallèle au plateau 100 couvrant, présente en section plane une forme de croix dite (en héraldique) « croix pattée » dont les branches 220 s'élargissent et s'incurvent à distance du centre pour former, à leur extrémité 225, un élargissement à bords en pointes 216 et 215.

En d'autres termes, chaque branche présente deux pointes 216 et 217 latérales opposées s'écartant l'une de l'autre, les extrémités des branches restant toutefois inscrites sur un cercle.

Cette forme confère à la borne 200 une large section périphérique constituée par les extrémités élargies de chacune des branches 220, tandis qu'elle autorise également une pénétration prononcée de chaque bossage 120 au sein de la forme de révolution.

Cette borne 200 est là encore tronconique, les évidements 210 étant ici ménagés seulement sur la moitié de la hauteur de cette borne, à savoir sur la moitié adjacente au plateau couvrant 160.

Dans ce mode de réalisation, la borne est également monobloc avec le plateau couvrant sous la forme d'une seule pièce en aluminium.

Là encore, les évidements 210 ménagés dans cette borne 200 permettent d'obtenir une surface périphérique et une section de large superficie.

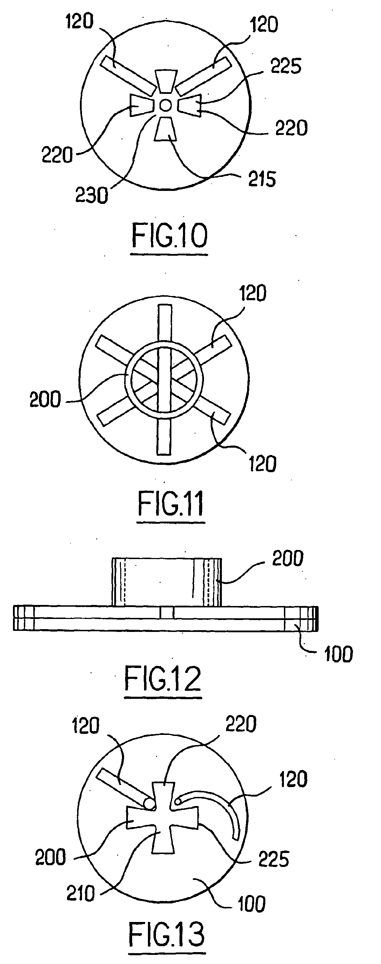

Dans la variante représentée à la figure 10, la borne 200, au lieu d'être pleine dans sa partie centrale, est constituée, là, uniquement de quatre branches 220 non raccordées entre elles, si ce n'est par le plateau couvrant 100 du collecteur.

La surface de contact entre une cosse à contact supérieur et la borne 200 est certes réduite, mais reste suffisante dans cette variante aussi.

L'évidement au centre 230 permet aux bossages 120 de se rapprocher encore plus près du centre, voire même d'être continus en traversée du plateau 100.

Par ailleurs, cette variante permet d'insérer un orifice d'imprégnation 130 au centre même du plateau 100.

Les branches 220 ont, ici aussi, une surface d'extrémité de forme tronconique afin de favoriser la connectique par une cosse à serrage périphérique.

Dans ce cas également, les branches 220 ont une largeur qui s'accroît lorsque l'on parcourt une branche de l'intérieur vers l'extérieur de la borne, avec des bords de branches sensiblement rectilignes lorsque observés en coupe parallèle au plateau.

Pour garantir la connexion, il est avantageux d'insérer une cale centrale au centre des branches 220 afin de renforcer l'ensemble sous l'effet du serrage périphérique.

Le nombre de branches 220 peut être différent, par exemple de trois (espacées de 120°), pour gagner en place, en matière et en simplicité de réalisation. Le nombre de branches pourrait également être de X, avec X supérieur à 4, avec un espacement de (360/X ° ).

On peut également réaliser des branches non espacées régulièrement, même si cela a tendance à « déshomogénéiser » la circulation du courant dans la bobine et donc déséquilibrer l'élément du point de vue échauffement et vieillissement.

Dans la variante des figures 11 et 12, on propose une borne 200 en forme d'anneau, c'est à dire ayant la forme d'un cylindre concentrique avec le couvercle tubulaire. Ce cylindre présente avantageusement des évidements à sa base pour laisser passer les bossages jusqu'à l'intérieur de ce cylindre.

Son rayon est suffisamment grand pour fournir une surface périphérique de contact suffisante, et simultanément l'espace laissé au centre permet aux bossages de venir atteindre les spires les plus centrales.

Un trou d'imprégnation 130 est ici prévu au centre du plateau 100, à l'intérieur de la borne 200.

Dans la variante de la figure 13, on tire profit du fait que les spires extérieures drainent plus de courant que les spires du centre.

Or, pour une spire considérée, un soudage par tir laser perpendiculaire à cette spire confère une surface de contact bossage/spire qui est la même, que la spire soit extérieure ou qu'elle soit intérieure.

On souhaite ici mettre en oeuvre un soudage qui génère au contraire une surface de contact qui soit plus importante pour les spires extérieures que pour les spires intérieures.

Un moyen de fournir un tel résultat est de former le dessous des bossages de manière conique, c'est à dire avec une surface inférieure de contact qui soit plus large en portion extérieure du collecteur, afin de mettre en contact plus de surface du collecteur vers l'extérieur de celui-ci.

Toutefois ici, pour augmenter la surface de soudage au niveau des spires extérieures, et ce avec un seul trait laser, on adopte un bossage 120 en spirale qui tend, vers l'extérieur, à tangenter les spires. Plus généralement on réalise un bossage dont la direction s'écarte progressivement d'une orientation radiale. Ainsi, plus le trait laser se rapproche de l'extérieur, plus la section soudée de collecteur est grande car le croisement entre bossage et spire se fait de plus en plus tangentiel.

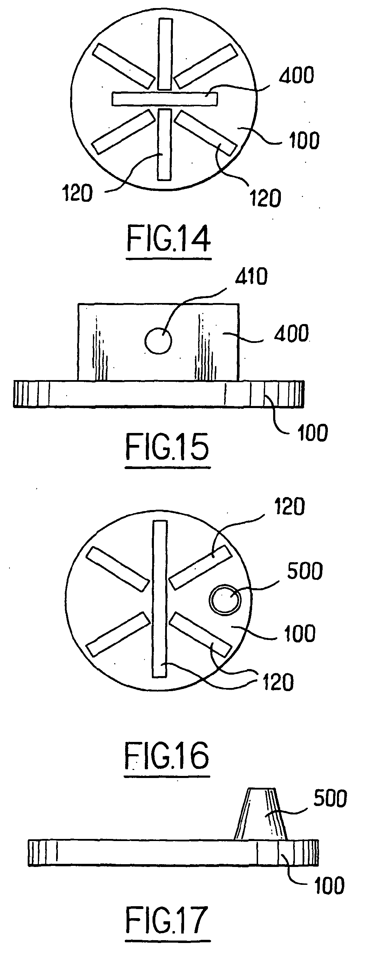

Dans une approche tout à fait différente, on mentionnera une borne à branches dont le nombre de branches pourrait être de deux (espacés de 180°) ou encore une borne en forme de parallélépipède rectangle 400 (figures 14 et 15). Celui-ci s'étend alors entre des bossages de type principaux.

Cette borne comporte par exemple un orifice 410 pour vissage ou est directement soudée sur une barre collectrice de courant.

Afin de permettre aux bossages d'accéder aux spires du centre, tout en conservant une borne intégrée au couvercle, une approche encore différente est d'excentrer la borne dans une zone située entre les bossages (borne 500 sur les figures 16 et 17).

Cette configuration a le désavantage de déséquilibrer la circulation de courant dans l'élément de stockage considéré.

On ajoute avantageusement alors une deuxième borne excentrée du même type et opposée en diamètre à la première, voire plusieurs autres bornes excentrées afin d'homogénéiser la circulation de courant dans le collecteur sans pénaliser le soudage de toutes les spires.

## Revendications

1. Composant de stockage d'énergie électrique comportant un enroulement de spires, et au moins un connecteur (100, 200) sensiblement perpendiculaire à la génératrice de l'enroulement, incluant un plateau (100) au contact d'une pluralité de ces spires, le plateau de connecteur présentant une face munie d'une borne (200) de forme essentiellement de révolution, le plateau (100) formant en outre une série de bossages (120, 125) qui s'étendent en relief sur une face du plateau opposée à celle portant la borne (200), **caractérisé en ce que** la borne (200) présente au moins un évidement interne (210) et **en ce qu'**au moins un bossage (120) pénètre dans un tel évidement (210).

2. Composant selon la revendication 1, **caractérisé ce qu'**il constitue un supercondensateur.

3. Composant selon la revendication 1 ou la revendication 2, **caractérisé en ce que** la borne (200) présente une forme externe inscrite au moins partiellement sur un tronc de cône.

4. Composant selon l'une quelconque des revendications précédentes, **caractérisé en ce qu'**il comporte au moins une surface (215) de fond d'évidement (210) sensiblement tronconique évasée vers l'extrémité libre de la borne (200).

5. Composant selon l'une quelconque des revendications précédentes, **caractérisé en ce que** la borne (200) forme une branche (220) entre chaque couple d'évidements (210) et **en ce que** chaque branche (220) se termine par une surface tronconique (225) s'élargissant vers la base de la borne.

6. Composant selon l'une quelconque des revendications précédentes, **caractérisé en ce que** la borne (200) est munie d'au moins un évidement (210) qui s'étend sur une partie seulement de la hauteur de la borne (200).

7. Composant selon l'une quelconque des revendications précédentes, **caractérisé en ce que** la borne (200) forme au moins une branche (220) bordée par deux évidements (210), qui s'étend en largeur lorsque parcourue en direction de la périphérie de la borne (200).

8. Composant selon l'une quelconque des revendications précédentes, **caractérisé en ce qu'**il présente une série de branches (220) qui sont sans lien entre elles (230) sur au moins une portion de leur hauteur.

9. Composant selon l'une quelconque des revendications précédentes, **caractérisé en ce que** la borne présente des branches (220) s'étendant en largeur lorsque parcourues vers leur extrémité périphérique à la borne, chaque branche formant à son extrémité deux pointes (216, 217) s'étendant à l'opposé l'une de l'autre.

10. Composant selon l'une quelconque des revendications précédentes, **caractérisé en ce qu'**il comporte au moins une série d'évidements (210) présentant chacun une section ovoïdale lorsque considéré en coupe parallèle au plateau couvrant (100).

11. Composant selon l'une quelconque des revendications précédentes, **caractérisé en ce qu'**il présente une borne (200) en forme de portion tubulaire.

12. Composant selon l'une quelconque des revendications précédentes, **caractérisé en ce qu'**il présente au moins un bossage courbe (120) de telle sorte que ce bossage s'étend selon une direction qui évolue en se détournant progressivement d'une direction radiale lorsque le bossage est parcouru vers l'extérieur du plateau couvrant.

13. Composant selon l'une quelconque des revendications précédentes, **caractérisé en ce que** le plateau couvrant (100) présente une face, opposée à celle portant la borne (200), qui est munie de canaux (140) adaptés à la circulation d'un électrolyte sur cette face.

14. Composant selon l'une quelconque des revendications précédentes, **caractérisé en ce que** le plateau couvrant présente au moins un orifice d'introduction d'électrolyte (130).

15. Composant selon l'une quelconque des revendications précédentes, **caractérisé en ce qu'**il présente plusieurs bossages (125) dont certains présentent une longueur inférieure à celle d'un rayon du plateau couvrant (100) et s'étendent seulement à l'intérieur d'une zone de périphérie du plateau couvrant (100).

## Claims

1. A component for storing electric energy including a spiral winding, and at least one connector (100, 200) substantially perpendicular to the generatrix of the winding, including a plate (100) in contact with a plurality of these turns, the connector plate having a face provided with a terminal (200) of an essentially axisymmetrical shape, the plate (100) further forming a series of bosses (120, 125) which extend in relief on a face of the plate opposite to the one bearing the terminal (200), **characterized in that** the terminal (200) has at least one internal recess (210) and **in that** at least one boss (120) penetrates into such a recess (210).

2. The component according to claim 1, **characterized in that** it forms a supercapacitor.

3. The component according to claim 1 or claim 2, **characterized in that** the terminal (200) has an external shape at least partly inscribed on a cone frustum.

4. The component according to any of the preceding claims, **characterized in that** it includes at least one substantially frusto-conical recess bottom (210) surface (215) flared towards the free end of the terminal (200).

5. The component according to any of the preceding claims, **characterized in that** the terminal (200) forms a branch (220) between each pair of recesses (210) and **in that** each branch (220) ends with a frusto-conical surface (225) widening towards the base of the terminal.

6. The component according to any of the preceding claims, **characterized in that** the terminal (200) is provided at least with one recess (210) which extends only over a portion of the height of the terminal (200).

7. The component according to any of the preceding claims, **characterized in that** the terminal (200) forms at least one branch (220) bordered by two recesses (210) which extends in width when running in the direction of the periphery of the terminal (200).

8. The component according to any of the preceding claims, **characterized in that** it has a series of branches (220) which are without any link between them (230) over at least one portion of their height.

9. The component according to any of the preceding claims, **characterized in that** the terminal has branches (220) extending in width when running towards their peripheral end at the terminal, each branch forming at its end two tips (216, 217) extending opposite to each other.

10. The component according to any of the preceding claims, **characterized in that** it includes at least one series of recesses (210) each having an ovoid section when considered in a section parallel to the covering plate (100).

11. The component according to any of the preceding claims, **characterized in that** it has a terminal (200) in the form of a tubular portion.

12. The component according to any of the preceding claims, **characterized in that** it has at least one curved boss (120) so that this boss extends along a direction which changes by gradually deviating from a radial direction when the boss runs towards the outside of the covering plate.

13. The component according to any of the preceding claims, **characterized in that** the covering plate (100) has a face, opposite to the one bearing the terminal (200), which is provided with channels (140) adapted to the flow of an electrolyte on this face.

14. The component according to any of the preceding claims, **characterized in that** the covering plate has at least one orifice for introducing an electrolyte (130).

15. The component according to any of the preceding claims, **characterized in that** it has several bosses (125), some of them having a length smaller than that of a radius of the covering plate (100) and only extending inside a peripheral area of the covering plate (100).

## Patentansprüche

1. Bauteil zum Speichern elektrischer Energie, eine Wicklung von Windungen umfassend, und mindestens einen Verbinder (100, 200) deutlich senkrecht zur Mantellinie der Wicklung, eine Platte (100) in Kontakt mit einer Vielzahl dieser Windungen einschließend, wobei die Verbinderplatte eine Seite aufweist, die mit einem Polkopf (200) in einer im wesentlichen achsensymmetrischen Form ausgestattet ist, wobei die Platte (100) weiterhin eine Reihe von Ausbauchungen (120, 125) bildet, die sich reliefartig auf einer Seite der Platte erstrecken, welche der den Polkopf (200) tragenden Seite gegenüberliegt, **dadurch gekennzeichnet, dass** der Polkopf (200) mindestens eine innere Aussparung (210) aufweist und **dadurch**, dass mindestens eine Ausbauchung (120) in eine derartige Aussparung (210) eindringt.

2. Bauteil nach Anspruch 1, **dadurch gekennzeichnet, dass** es einen Superkondensator bildet.

3. Bauteil nach Anspruch 1 oder Anspruch 2, **dadurch gekennzeichnet, dass** der Polkopf (200) eine äußere Form aufweist, die mindestens teilweise auf einem Kegelansatz einbeschrieben ist.

4. Bauteil nach einem der vorangehenden Ansprüche, **dadurch gekennzeichnet, dass** es mindestens eine deutlich kegelstumpfartige rückwärtige Fläche (215) der Aussparung (210) umfasst, die in Richtung des freien Endes des Polkopfes (200) erweitert ist.

5. Bauteil nach einem der vorangehenden Ansprüche, **dadurch gekennzeichnet, dass** der Polkopf (200) zwischen jedem Aussparungspaar (210) einen Schenkel (220) bildet und **dadurch**, dass jeder Schenkel (220) in einer kegelstumpfförmigen Fläche (225) endet, die sich in Richtung Polkopfbasis erweitert.

6. Bauteil nach einem der vorangehenden Ansprüche, **dadurch gekennzeichnet, dass** der Polkopf (200) mit mindestens einer Aussparung (210) ausgestattet ist, die sich nur über einen Teil der Höhe des Polkopfs (200) erstreckt.

7. Bauteil nach einem der vorangehenden Ansprüche, **dadurch gekennzeichnet, dass** der Polkopf (200) mindestens einen von zwei Aussparungen (210) gesäumten Schenkel (220) bildet, der sich der Breite nach erstreckt, wenn er in Richtung des Umfangs des Polkopfs (200) durchflossen wird.

8. Bauteil nach einem der vorangehenden Ansprüche, **dadurch gekennzeichnet, dass** es eine Reihe von Schenkeln (220) aufweist, die über mindestens einen Abschnitt ihrer Höhe ohne Verbindung untereinander (230) sind.

9. Bauteil nach einem der vorangehenden Ansprüche, **dadurch gekennzeichnet, dass** der Polkopf Schenkel (220) aufweist, die sich der Breite nach erstrecken, wenn sie in Richtung ihres peripheren Endes zum Polkopf durchflossen werden, wobei jede Verzweigung an ihrem Ende zwei Punkte (216, 217) bildet, die sich gegenüberliegend zueinander erstrecken.

10. Bauteil nach einem der vorangehenden Ansprüche, **dadurch gekennzeichnet, dass** es mindestens eine Reihe von Aussparungen (210) umfasst, von denen jede einen eiförmigen Sektor aufweist, wenn im Parallelschnitt zur Abdeckplatte (100) betrachtet.

11. Bauteil nach einem der vorangehenden Ansprüche, **dadurch gekennzeichnet, dass** es einen Polkopf (200) in Form eines rohrförmigen Abschnitts aufweist.

12. Bauteil nach einem der vorangehenden Ansprüche, **dadurch gekennzeichnet, dass** es mindestens eine gekrümmte Ausbauchung (120) aufweist, die derart ist, dass sich diese Ausbauchung in eine Richtung erstreckt, die sich schrittweise von einer radialen Richtung abgelenkt entwickelt, wenn die Ausbauchung in Außenrichtung der Abdeckplatte durchflossen wird.

13. Bauteil nach einem der vorangehenden Ansprüche, **dadurch gekennzeichnet, dass** die Abdeckplatte (100) eine Seite aufweist, die der den Polkopf (200) tragenden Seite gegenüberliegt, die mit Kanälen (140) ausgestattet ist, die für die Zirkulation eines Elektrolyts auf dieser Seite geeignet sind.

14. Bauteil nach einem der vorangehenden Ansprüche, **dadurch gekennzeichnet, dass** die Abdeckplatte mindestens eine Elektrolyteinleitungsöffnung (130) aufweist.

15. Bauteil nach einem der vorangehenden Ansprüche, **dadurch gekennzeichnet, dass** es mehrere Ausbauchungen (125) aufweist, von denen einige eine Länge haben, die kleiner ist als ein Radius der Abdeckplatte (100) und sich lediglich innerhalb eines Umfangsbereichs der Abdeckplatte (100) erstrecken.
